# EUROPEAN PATENT SPECIFICATION

(11) **EP 4 228 199 B1**
(45) Date of publication and mention of the grant of the patent: **22.01.2025**
(21) Application number: 22726381.1
(22) Date of filing: 25.02.2022
(51) Int. Cl.: H04L 9/08, H04L 9/40

(54) **ENCRYPTION/DECRYPTION MODULE AND METER READING SYSTEM SUITABLE FOR DLMS/COSEM COMMUNICATION PROTOCOL**
VERSCHLÜSSELUNGS-/ENTSCHLÜSSELUNGSMODUL UND ZÄHLERABLESESYSTEM FÜR DLMS/COSEM-KOMMUNIKATIONSPROTOKOLL
MODULE DE CHIFFREMENT/DÉCHIFFREMENT ET SYSTÈME DE LECTURE DE COMPTEUR APPROPRIÉ POUR UN PROTOCOLE DE COMMUNICATION DLMS/COSEM

(30) Priority: 22.12.2021 CN 202111581066
(43) Date of publication of application: 16.08.2023
(73) Proprietor: Hangzhou Vango Technologies, Inc., Hangzhou, Zhejiang 310053 (CN)
(72) Inventor: CHEN, Bo, Hangzhou Zhejiang 310053 (CN); HAN, Jianjiong, Hangzhou Zhejiang 310053 (CN); CUI, Guoyu, Hangzhou Zhejiang 310053 (CN)
(74) Representative: HGF
(86) International application number: PCT/CN2022/077867
(87) International publication number: WO 2023/115692

(56) References cited:
- WO-A1-2021/208014
- CN-A- 103 529 741
- CN-A- 106 209 916
- CN-A- 109 598 132
- CN-U- 204 258 856
- CN-U- 206 077 441
- DE-A1- 102016 111 858
- DE-A1- 102018 202 357
- ANONYMOUS: "DLMS/COSEM Architecture and Protocols", DLMS USER ASSOCIATION, 8 May 2019 (2019-05-08), XP055834485, Retrieved from the Internet <URL:https://www.dlms.com/files/Green_Book_Edition_9-Excerpt.pdf> [retrieved on 20210824]

## Description

### TECHNICAL FIELD

The present invention belongs to the field of electric power, and particularly relates to an encryption and decryption module and a meter reading system applicable to DLMS/COSEM communication protocol.

### BACKGROUND

DLMS/COSEM (DLMS: Device Language Message Specification, COSEM: Companion Specification for Energy Metering) communication protocol is a new communication standard for electric energy meters proposed by the IEC (International Electrotechnical Commission) to solve the problems of data acquisition, instrument installation and maintenance, and system integration in automatic meter reading systems and metering systems. DLMS/COSEM communication protocol has become a relatively perfect communication protocol standard for electric meters so far.

For security, data may be encrypted in communication in general. In practical applications, data may be encrypted at different levels according to different security levels. When an electric energy meter acquires data, it is desirable to decrypt the data before use. Similarly, data returned by the electric energy meter to the meter reading device needs to be encrypted first, and then transmitted to the meter reading device through a communication channel.

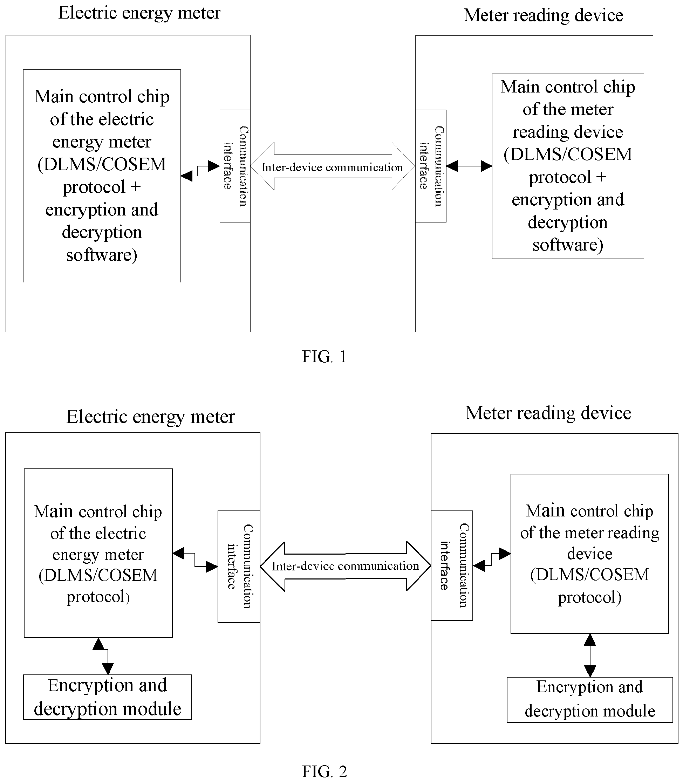

As shown in FIG. 1, in the design of an existing meter reading system, encrypted data (ciphertext) sent by a meter reading device is converted by a communication interface circuit in a physical layer, and then enters a MCU (Microcontroller Unit) of an electric energy meter. In the main control chip of the electric energy meter, a firmware program decrypts data by calling an encryption and decryption function, and the firmware program returns the decrypted data after corresponding processing. Similarly, the firmware program calls the encryption and decryption function to encrypt the data, and then returns the ciphertext to the meter reading device through a communication interface. A processing mode in the meter reading device is the same as that in the electric energy meter.

As mentioned above, in the existing system design, the data encryption and decryption module is not independent in the design, but integrated in application software, which is developed and maintained by software developers. This design idea obviously has potential safety hazards. DE102016111858A1 is part of the prior-art.

### SUMMARY

Object of the present invention: the technical problem to be solved by the present invention is to provide an encryption and decryption module and a meter reading system applicable to DLMS/COSEM communication protocol for the deficiencies of the prior art.

In order to solve the foregoing technical problem, a first aspect discloses an encryption and decryption module applicable to DLMS/COSEM communication protocol, applied to an electric energy meter and a meter reading device in a meter reading system, and comprising an encryption and decryption main control chip, an encryption and decryption interface circuit, an encryption and decryption power circuit and a running indicator light, wherein:
the encryption and decryption main control chip is a core device of the encryption and decryption module, and is configured for completing encryption and decryption operations of data;
the encryption and decryption interface circuit is configured for the encryption and decryption interface circuit to conduct data and signal interaction with an external module, and the external module refers to modules except the encryption and decryption module in the electric energy meter and the meter reading device;
the encryption and decryption power circuit is configured for converting a power level input by the encryption and decryption interface circuit into a level needed by the encryption and decryption module; and
the running indicator light is configured for displaying a running state of the encryption and decryption module.

With reference to the first aspect, optionally, pins of the encryption and decryption interface circuit comprise an input and output pin VDD, an analog and digital ground pin GND, an input pin MOSI (Master output slave input), an output pin MISO(Master input slave output), an output pin MISO (Master input slave output) an input pin SCLK (Serial Clock), an input pin CS (Chip select), an output pin STA (State) and an input pin RST (Reset);
the input and output pin VDD is configured for power input of the encryption and decryption module;
the analog and digital ground pin GND is configured for grounding the encryption and decryption module, and is connected with a ground of the electric energy meter or a ground of the meter reading device;
the input pin MOSI is a standard serial interface, and configured for data input of the encryption and decryption module; and the standard serial interface comprises any one of SPI, UART (Universal Asynchronous Receiver/Transmitter) and IIC (Inter-Integrated Circuit Bus);
the output pin MISO is a standard serial interface, and configured for data output of the encryption and decryption module;
the input pin SCLK is a standard serial interface, and configured for clock input;
the input pin CS is a standard serial interface, and configured for inputting a chip select signal;
the output pin STA is configured for indicating the running state of the encryption and decryption module, indicating that the encryption and decryption module is working abnormally or in the process of encryption and decryption if a high level is output, and indicating the main control chip of the electric energy meter or the main control chip of the meter reading device not to conduct a reading and writing operation on the encryption and decryption module; and indicating that the encryption and decryption module is standby if a low level is output; and
the input pin RST is configured for inputting reset control of the encryption and decryption module.

With reference to the first aspect, optionally, a relationship between a state of the running indicator light and the running state of the encryption and decryption module comprises:
the running indicator is always on: a power of the encryption and decryption module is normal, and power supply of the encryption and decryption main control chip is normal;
the running indicator is on for 0.5 second, and off for 0.5 second, and flashes periodically: the encryption and decryption module is in a normal running state;
the running indicator is on for 0.2 second, and off for 0.2 second, and flashes quickly and periodically: the encryption and decryption module is in a running state of communication, and encryption and decryption; and
the running indicator is on for 1 second, and off for 1 second, and flashes slowly and periodically: the encryption and decryption module is in an abnormal working state, and the abnormal working state comprises abnormal program self-checking and long-term wrong communication .

With reference to the first aspect, optionally, the encryption and decryption interface circuit also acts as an installation or welding interface between the encryption and decryption module and an external module circuit board, and a form of the interface corresponds to a connector interface or a SMD welding interface.

With reference to the first aspect, optionally, for functional consideration, a MCU with strong computing power needs to be selected as the encryption and decryption main control chip. Considering the cost, a size of the encryption and decryption main control chip should not be too large, and the encryption and decryption main control chip do not need too many pins. Parameter requirements of the encryption and decryption main control chip are as follows:
core: above M0; dominant frequency: above 8 MHz; FLASH: 32 KB, with IAP (In Application Programming) function, and configured for storing parameters; RAM (Random Access Memory): 8KB; SPI (Serial Peripheral Interface): 1; GPIO (General-purpose input/output) : more than 5; and package: SOP16 (Small Out-Line Package 16).

With reference to the first aspect, optionally, the running indicator light is a SMD light-emitting diode, which is namely an LED (light-emitting diode) light, and a color of the running indicator light is green.

A second aspect discloses a meter reading system applicable to DLMS/COSEM communication protocol, comprising an electric energy meter and a meter reading device, wherein the electric energy meter comprises a main control chip of the electric energy meter and an encryption and decryption module of the electric energy meter, the meter reading device comprises a main control chip of the meter reading device and an encryption and decryption module of the meter reading device, the encryption and decryption module of the electric energy meter is the same as the encryption and decryption module of the meter reading device, which is the encryption and decryption module above, and the main control chip of the electric energy meter and the main control chip of the meter reading device are collectively referred to as a first main control chip;
a data encryption and decryption processing mode of the electric energy meter comprises:
encrypted data sent by the meter reading device after conversion in physical layer by a communication interface circuit, entering the main control chip of the electric energy meter; sending, by the main control chip of the electric energy meter, the encrypted data to the encryption and decryption module of the electric energy meter, which decrypts the data and sends the decrypted data back to the main control chip of the electric energy meter; completing, by the main control chip of the electric energy meter, DLMS/COSEM protocol processing according to plaintext, and then sending data to be encrypted to the encryption and decryption module of the electric energy meter; encrypting, by the encryption and decryption module of the electric energy meter, the data, and returning the encrypted ciphertext to the main control chip of the electric energy meter; and returning, by the main control chip of the electric energy meter, the ciphertext to the meter reading device through the communication interface; and
a data encryption and decryption processing mode of the meter reading device is the same as the data encryption and decryption processing mode of the electric energy meter.

With reference to the second aspect, optionally, a workflow of the encryption and decryption module comprises:
step 1, after the encryption and decryption module is powered on, outputting, by the output pin STA, a high level, and the running indicator light being always on to perform self-checking; if self-test is abnormal, the running indicator light flashing slowly and periodically; and if the self-checking is normal, executing step 2;
step 2, after the encryption and decryption module completes self-checking initialization, outputting, by the output pin STA, a low level, the running indicator light flashing periodically, and being standby;
step 3, sensing, by the first main control chip, that the output pin STA outputs a low level, sending data to the encryption and decryption module to perform operations; the operations comprising, encryption, decryption and reading and writing;
step 4, parsing, by the encryption and decryption module, received data according to a communication protocol between the encryption and decryption module and the first main control chip; if the received data is an encryption and decryption operation, executing 5, and if the received data is a reading operation, executing step 6;
step 5, performing the encryption and decryption operation: sending, by the first main control chip, data to be encrypted and decrypted to the encryption and decryption module, performing, by the encryption and decryption module, an encryption and decryption operation according to an encryption and decryption type, and outputting, by the output pin STA, a high level; after the encryption and decryption, outputting, by the output pin STA, a low level; and judging, by the first main control chip, whether the encryption and decryption module receives correct data and starts the encryption and decryption operation by judging whether a state of the output pin STA changes from the low level to the high level; and
step 6, performing the reading operation: sending, by the main control chip reading that the output pin STA changes from the high level to the low level, a reading command to read an encryption and decryption result.

With reference to the second aspect, optionally, in order to standardize data interaction between the module of the present invention and the main control chip of the electric energy meter or the meter reading device, the communication protocol between the encryption and decryption module and the first main control chip comprises a physical layer and a protocol layer, the physical layer inputs and outputs data through the input pin MOSI and the output pin MISO of the encryption and decryption interface circuit, the encryption and decryption module is a slave, and the first main control chip is a master;
the protocol layer comprises a communication frame sent by the master to the slave and a communication frame returned by the slave to the master, and the communication frame sent by the master to the slave sequentially comprises fields of a frame header, a length LEN, a command CTR, a type TYPE, frame data DATE1 sent by the master, a check bit CRC and a frame tail; and
the communication frame returned by the slave to the master sequentially comprises fields of a frame header, a length LEN, a flag FLG, frame data DATE2 responded by the slave, a check bit CRC and a frame tail.

With reference to the second aspect, optionally, the frame header and the frame tail are configured for identifying one completed communication frame;
the length LEN is a total length of one communication frame excluding a frame header and a frame tail, the length LEN is one byte, and the total length of one communication frame is unable to exceed 256 bytes; otherwise, the communication frame needs to be transmitted for twice;
the command CTR is configured for the master to send an operating command to the slave;
the type TYPE is configured for setting operating types corresponding to different operating commands according to an value of the command CTR;
the frame data DATE1 sent by the master is configured for sending data corresponding to different operating commands to the slave according to the value of the command CTR;
the flag FLG is configured for identifying a validity of data read by the slave;
the frame data DATE2 responded by the slave is configured for the slave to return data to the master according to the flag FLG; and
the check bit CRC adopting CRC (Cyclic Redundancy Check) check, is configured for checking all data in one communication frame except the frame header, the frame tail and the check bit. The invention is as defined in the appended claims.

### Beneficial effects:

1. The electric energy meter and the meter reading device in the meter reading system provided in the present application separate the encryption algorithm from the service program, and use the separate encryption and decryption module, so that the encryption algorithm runs in the independent MCU, making the encryption safer and more reliable.
2. A key is stored in the encryption and decryption module to effectively prevent the key from being stolen.
3. The encryption and decryption module integrates various encryption algorithms in DLMS/COSEM communication, so that system developers do not need to develop encryption algorithms, which reduces the burden of the developers and speeds up a product development cycle.

### BRIEF DESCRIPTION OF THE DRAWINGS

The advantages of the above and/or other aspects of the present invention will become more apparent by further explaining the present invention with reference to the following drawings and detailed description.
FIG. 1 is a schematic structural diagram of a meter reading system according to the prior art.
FIG. 2 is a schematic structural diagram of a meter reading system applicable to DLMS/COSEM communication protocol provided by the embodiments of the present application.
FIG. 3 is a schematic structural diagram of an encryption and decryption module applicable to DLMS/COSEM communication protocol provided by the embodiments of the present application.
FIG. 4 is a schematic diagram showing pins of an interface circuit of an encryption and decryption module provided by the embodiments of the present application.
FIG. 5 is a schematic diagram showing a workflow of a meter reading system applicable to DLMS/COSEM communication protocol provided by the embodiments of the present application.

### DETAILED DESCRIPTION

The embodiments of the present invention will be described hereinafter with reference to the drawings.

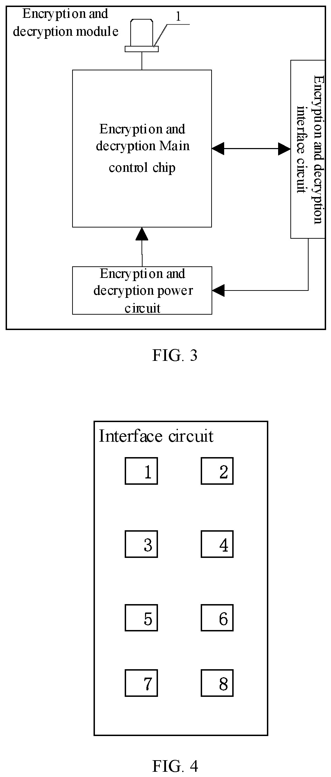

A first embodiment of the present application discloses an encryption and decryption module applicable to DLMS/COSEM communication protocol, applied to an electric energy meter and a meter reading device in a meter reading system, and as shown in FIG. 3, comprising an encryption and decryption main control chip, an encryption and decryption interface circuit, an encryption and decryption power circuit and a running indicator light 1, wherein:
the encryption and decryption main control chip is a core device of the encryption and decryption module, and is configured for completing encryption and decryption operations of data;
the encryption and decryption interface circuit is configured for the encryption and decryption interface circuit to conduct data and signal interaction with an external module, and the external module refers to modules except the encryption and decryption module in the electric energy meter and the meter reading device;
the encryption and decryption power circuit is configured for converting a power level input by the encryption and decryption interface circuit into a level needed by the encryption and decryption module; and
the running indicator light 1 is configured for displaying a running state of the encryption and decryption module.

Parameter requirements of the encryption and decryption main control chip are shown in Table 1:

**Table 1**

| Serial No. | Item | Parameter |
|---|---|---|
| 1 | Core | Above M0 |
| 2 | Dominant frequency | Above 8 MHz |
| 3 | FLASH | 32 KB, with IAP function, and configured for storing parameters comprising encrypted and decrypted various keys and device ID numbers. |
| 4 | RAM | 8 KB |
| 5 | SPI | 1 |
| 6 | GPIO | >5 |
| 7 | Package | SOP16 |

Pins of the encryption and decryption interface circuit comprise an input and output pin VDD, an analog and digital ground pin GND, an input pin MOSI, an output pin MISO, an input pin SCLK, an input pin CS, an output pin STA and an input pin RST; and definitions of the pins are shown in FIG. 4 and Table 2.

**Table 2**

| Serial No. | Name | Type | Definition of pin |
|---|---|---|---|
| 1 | VDD | I/P | Power input of the encryption and decryption module, lower than 5.5 V |
| 2 | GND | G | Grounding the encryption and decryption module, and connected with a ground of the electric energy meter or a ground of the meter reading device |
| 3 | MOSI | I | Standard serial interface: data input of the encryption and decryption module, standard serial interfaces such as SPI, UART and IIC may be used, and SPI interface is recommended, the same below. |
| 4 | MISO | O | Standard serial interface: data output of the encryption and decryption module |
| 5 | SCLK | I | Standard serial interface: clock input of the encryption and decryption module |
| 6 | CS | I | Standard serial interface: chip select signal of the encryption and decryption module |
| 7 | STA | O | Indicating the running state of the encryption and decryption module: indicating that the module is working abnormally or in the process of encryption and decryption if a high level is output, and not conducting a reading and writing operation on the encryption and decryption module; and indicating that the encryption and decryption module is standby if a low level is output |
| 8 | RST | I | Reset control input of the encryption and decryption module |

In the above table, I refers to input pin; O refers to output pin; P refers to power pin; and G refers to analog and digital ground.

A relationship between a state of the running indicator light 1 and the running state of the encryption and decryption module is shown in Table 3:

**Table 3**

| Serial number | Running indicator light 1 | Running state of the encryption and decryption module |
|---|---|---|
| 1 | Always on | The encryption and decryption module is normal, and power supply of the encryption and decryption main control chip is normal. |
| 2 | On for 0.5 second, off for 0.5 second, and flashing periodically | The encryption and decryption module is in a normal running state. |
| 3 | On for 0.2 second, off for 0.2 second, and flashing quickly and periodically | The encryption and decryption module is in a running state of communication, and encryption and decryption. |
| 4 | On for 1 second, off for 1 second, and flashing slowly and periodically | The encryption and decryption module is in an abnormal working state, and the abnormal working state comprises abnormal program self-checking and long-term wrong communication, or the like. |

The running indicator light 1 is a SMD light-emitting diode, i.e., an LED light, and a color of the running indicator light is green.

The encryption and decryption interface circuit also acts as an installation or welding interface between the encryption and decryption module and an external module circuit board, and a form of the interface corresponds to a connector interface or a SMD welding interface. The connector interface may be a single row of pins or a double row of pins, and the SMD welding interface may be a stamp hole and the like.

A second embodiment of the present application discloses a meter reading system applicable to DLMS/COSEM communication protocol, as shown in FIG. 2, comprising an electric energy meter and a meter reading device, wherein the electric energy meter comprises a main control chip of the electric energy meter and an encryption and decryption module of the electric energy meter, the meter reading device comprises a main control chip of the meter reading device and an encryption and decryption module of the meter reading device, the encryption and decryption module of the electric energy meter is the same as the encryption and decryption module of the meter reading device, which is the encryption and decryption module above, and the main control chip of the electric energy meter and the main control chip of the meter reading device are collectively referred to as a first main control chip;
a data encryption and decryption processing mode of the electric energy meter comprises:
encrypted data sent by the meter reading device after conversion in physical layer by a communication interface circuit, entering the main control chip of the electric energy meter; sending, by the main control chip of the electric energy meter, the encrypted data to the encryption and decryption module of the electric energy meter, which decrypts the data and sends the decrypted data back to the main control chip of the electric energy meter; completing, by the main control chip of the electric energy meter, DLMS/COSEM protocol processing according to plaintext, and then sending data to be encrypted to the encryption and decryption module of the electric energy meter; encrypting, by the encryption and decryption module of the electric energy meter, the data, and returning the encrypted ciphertext to the main control chip of the electric energy meter; and returning, by the main control chip of the electric energy meter, the ciphertext to the meter reading device through the communication interface; and
a data encryption and decryption processing mode of the meter reading device is the same as the data encryption and decryption processing mode of the electric energy meter.

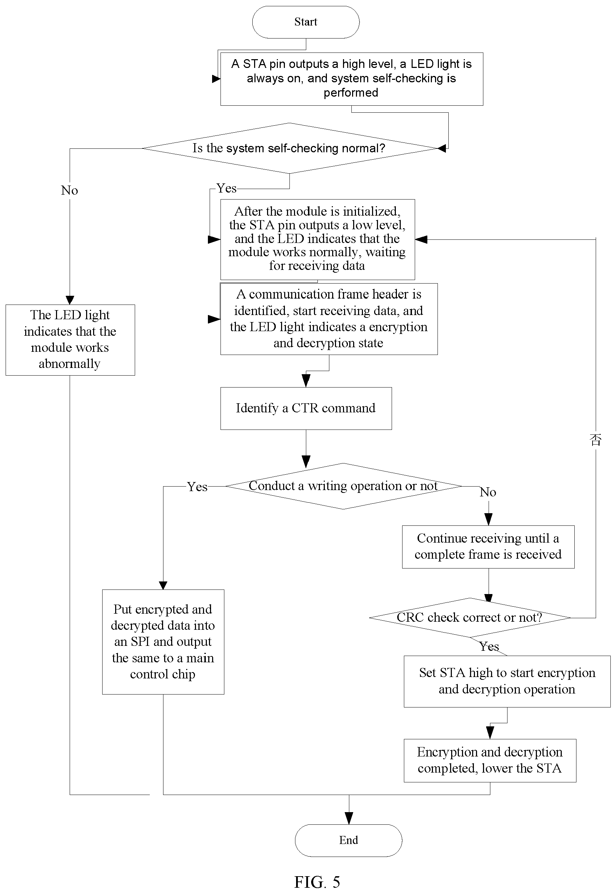

As shown in FIG. 5, a workflow of the encryption and decryption module comprises:
step 1, after the encryption and decryption module is powered on, outputting, by the output pin STA, a high level, and the running indicator light 1 being always on to perform self-checking; if the self-checking is abnormal, the running indicator light 1 flashing slowly and periodically; and if the self-checking is normal, executing step 2;
step 2, after the encryption and decryption module completes self-checking initialization, outputting, by the output pin STA, a low level, the running indicator light 1 flashing periodically, and being standby;
step 3, sensing, by the first main control chip, that the output pin STA outputs a low level, sending data to the encryption and decryption module to perform operations; the operations comprising, encryption, decryption and reading and writing;
step 4, parsing, by the encryption and decryption module, received data according to a communication protocol between the encryption and decryption module and the first main control chip; if the received data is an encryption and decryption operation, executing 5, and if the received data is a reading operation, executing step 6;
step 5, performing the encryption and decryption operation: sending, by the first main control chip, data to be encrypted and decrypted to the encryption and decryption module, performing, by the encryption and decryption module, an encryption and decryption operation according to an encryption and decryption type, and outputting, by the output pin STA, a high level; after the encryption and decryption, outputting, by the output pin STA, a low level; and judging, by the first main control chip, whether the encryption and decryption module receives correct data and starts the encryption and decryption operation by judging whether a state of the output pin STA changes from the low level to the high level; and
step 6, performing the reading operation: sending, by the main control chip reading that the output pin STA changes from the high level to the low level, a reading command to read an encryption and decryption result.

The communication protocol between the encryption and decryption module and the first main control chip comprises a physical layer and a protocol layer, the physical layer inputs and outputs data through the input pin MOSI and the output pin MISO of the encryption and decryption interface circuit, the encryption and decryption module is a slave, and the first main control chip is a master; and
the protocol layer comprises a communication frame sent by the master to the slave and a communication frame returned by the slave to the master. A format of the communication frame sent by the master to the slave is shown in Table 4, wherein n represents the lengths of the frame data DATE1 sent by the master and the frame data DATE2 responded by the slave, and n is less than 128 bytes:

**Table 4**

| Frame header | Lengt h | Comm and | Type | Frame data sent by the master | | | Check bit | Frame tail |
|---|---|---|---|---|---|---|---|---|
| 0x7E | LEN | CTR | TYPE | DATE1 (1) | ... | DATE1 (n) | CRC | 0x7E |

A format of the communication frame returned by the slave to the master is shown in Table 5.

**Table 5**

| Frame header | Length | Flag | Frame data responded by the slave | | | Check bit | Frame tail |
|---|---|---|---|---|---|---|---|
| 0x7E | LEN | FLG | DATE2 (1) | ... | DATE2 (n) | CRC | 0x7E |

The frame header and the frame tail are configured for identifying one completed communication frame, and are set as 0x7E in this embodiment.

The length LEN is a total length of one communication frame excluding a frame header and a frame tail, the length LEN is one byte, and the total length of one communication frame is unable to exceed 256 bytes; otherwise, the communication frame needs to be transmitted for twice.

The command CTR is configured for the master to send an operating command to the slave, which is as defined in Table 6.

**Table 6**

| Command character | Definition |
|---|---|
| 0x00 | Conduct a writing operation to the encryption and decryption module, and the slave responds no frame |
| 0x01 | Conduct a reading operation on the encryption and decryption module |
| 0x02 | Encrypt a data portion of the communication frame, and the slave responds no frame |
| 0x03 | Decrypt the data portion of the communication frame, and the slave responds no frame |

The type TYPE is configured for setting operating types corresponding to different operating commands according to an value of the command CTR;
when CTR is 0x00, the definition of the type character is shown in Table 7.

**Table 7**

| Type character | Definition |
|---|---|
| 0x00 | Conduct a writing operation on the module parameters |

When CTR is 0x01, the definition of the type character is shown in Table 8.

**Table 8**

| Type character | Definition |
|---|---|
| 0x00 | Conduct a reading operation on the module parameters |
| 0x01 | Conduct a reading operation on last encrypted and decrypted data results of the module |

When CTR is 0x02 and 0x03, the type TYPE represents an encryption type, and the definition of the type character is shown in Table 9.

**Table 9**

| Type character | Definition |
|---|---|
| 0x00 | Encryption and decryption of AES-ECB-128 (Advanced Encryption Standard; Electronic Codebook) |
| 0x01 | Encryption and decryption of MD5 (Message Digest Algorithm 5) |
| 0x02 | Encryption and decryption of SHA-1 (Secure Hash Algorithm 1) |
| 0x03 | Encryption and decryption of AES-GCM-128 (GCM: Galois/Counter Mode, this symmetric encryption adopts Counter mode with GMAC message authentication code; GMAC: Galois message authentication code mode) |
| 0x04 | Encryption and decryption of RFC3394 |

The frame data DATE1 sent by the master is configured for sending data corresponding to different operating commands to the slave according to the value of the command CTR, which is as defined in Table 10.

**Table 10**

| Command character | DATE11 area definition |
|---|---|
| 0x00 | Parameters that need to be written into the encryption and decryption module, such as a key needed by the encryption and decryption algorithm and an ID number of the main device, and the like. |
| 0x01 | When reading, there is no data item in this area. |
| 0x02 | The master sends data to be encrypted and decrypted |
| 0x03 | |

The flag FLG is configured for identifying a validity of data read by the slave, which is as defined in Table 11.

**Table 11**

| Identification character | Definition |
|---|---|
| 0x00 | The read data is valid |
| 0x01 | The read data is invalid, and there is no data in the DATE2 area in this case. |

The frame data DATE2 responded by the slave is configured for the slave to return data to the master according to the flag FLG.

The check bit CRC adopting CRC check, is configured for checking all data in one communication frame except the frame header, the frame tail and the check bit.

The present invention provides the ideas and methods of the encryption and decryption module and the meter reading system applicable to DLMS/COSEM communication protocol. There are many methods and ways to realize the technical solutions. The above is only the specific embodiments of the present invention. It should be pointed out that those of ordinary skills in the art can make some improvements and embellishments without departing from the principle of the present invention, and these improvements and embellishments should also be regarded as falling with the scope of protection of the present invention. All the unspecified components in the embodiments can be realized by the prior art.

## Claims

1. A meter reading system applicable to DLMS/COSEM communication protocol, comprising an electric energy meter and a meter reading device, wherein the electric energy meter comprises a main control chip of the electric energy meter and an encryption and decryption module of the electric energy meter, the meter reading device comprises a main control chip of the meter reading device and an encryption and decryption module of the meter reading device, the encryption and decryption module of the electric energy meter is the same as the encryption and decryption module of the meter reading device, collectively referred to as the encryption and decryption module, and the main control chip of the electric energy meter and the main control chip of the meter reading device are collectively referred to as a first main control chip; and wherein
a data encryption and decryption processing mode of the electric energy meter comprises:
encrypted data sent by the meter reading device after conversion in physical layer by a communication interface circuit, entering the main control chip of the electric energy meter; sending, by the main control chip of the electric energy meter, the encrypted data to the encryption and decryption module of the electric energy meter, which decrypts the data and sends the decrypted data back to the main control chip of the electric energy meter; completing, by the main control chip of the electric energy meter, DLMS/COSEM protocol processing according to plaintext, and then sending data to be encrypted to the encryption and decryption module of the electric energy meter; encrypting, by the encryption and decryption module of the electric energy meter, the data, and returning the encrypted ciphertext to the main control chip of the electric energy meter; and returning, by the main control chip of the electric energy meter, the ciphertext to the meter reading device through the communication interface; and
a data encryption and decryption processing mode of the meter reading device is the same as the data encryption and decryption processing mode of the electric energy meter;
and comprising an encryption and decryption main control chip, an encryption and decryption interface circuit, an encryption and decryption power circuit and a running indicator light (1), wherein:
the encryption and decryption main control chip is a core device of the encryption and decryption module, and is configured for completing encryption and decryption operations of data;
the encryption and decryption interface circuit is configured for the encryption and decryption interface circuit to conduct data and signal interaction with an external module, and the external module refers to modules except the encryption and decryption module in the electric energy meter and the meter reading device;
the encryption and decryption power circuit is configured for converting a power level input by the encryption and decryption interface circuit into a level needed by the encryption and decryption module; and
the running indicator light (1) is configured for displaying a running state of the encryption and decryption module;
the pin of the encryption and decryption interface circuit comprises an output pin STA,the output pin STA is configured for indicating the running state of the encryption and decryption module, indicating that the encryption and decryption module is working abnormally or in the process of encryption and decryption if a high level is output, and indicating that the encryption and decryption module is standby if a low level is output; and
wherein a workflow of the encryption and decryption module comprises:
step 1, after the encryption and decryption module is powered on, outputting, by the output pin STA, a high level, and the running indicator light(1) being always on to perform self-checking; if the self-checking is abnormal, the running indicator light (1) flashing slowly and periodically; and if the self-checking is normal, executing step 2;
step 2, after the encryption and decryption module completes self-checking initialization, outputting, by the output pin STA, a low level, the running indicator light (1) flashing periodically, and being standby;
step 3, sensing, by the first main control chip, that the output pin STA outputs a low level, sending data to the encryption and decryption module to perform operations; the operations comprising, encryption, decryption and reading and writing;
step 4, parsing, by the encryption and decryption module, received data according to a communication protocol between the encryption and decryption module and the first main control chip; if the received data is an encryption and decryption operation, executing 5, and if the received data is a reading operation, executing step 6;
step 5, performing the encryption and decryption operation: sending, by the first main control chip, data to be encrypted and decrypted to the encryption and decryption module, performing, by the encryption and decryption module, an encryption and decryption operation according to an encryption and decryption type, and outputting, by the output pin STA, a high level; after the encryption and decryption, outputting, by the output pin STA, a low level; and judging, by the first main control chip, whether the encryption and decryption module receives correct data and starts the encryption and decryption operation by judging whether a state of the output pin STA changes from the low level to the high level; and
step 6, performing the reading operation: sending, by the main control chip reading that the output pin STA changes from the high level to the low level, a reading command to read an encryption and decryption result.

2. The meter reading system applicable to DLMS/COSEM communication protocol according to claim 1, wherein pins of the encryption and decryption interface circuit comprise an input and output pin VDD, an analog and digital ground pin GND, an input pin MOSI, an output pin MISO, an input pin SCLK, an input pin CS and an input pin RST;
the input and output pin VDD is configured for power input of the encryption and decryption module;
the analog and digital ground pin GND is configured for grounding the encryption and decryption module, and is connected with a ground of the electric energy meter or a ground of the meter reading device;
the input pin MOSI is a standard serial interface, and configured for data input of the encryption and decryption module;
the output pin MISO is a standard serial interface, and configured for data output of the encryption and decryption module;
the input pin SCLK is a standard serial interface, and configured for clock input;
the input pin CS is a standard serial interface, and configured for inputting a chip select signal;
and the input pin RST is configured for inputting a reset signal of the encryption and decryption module.

3. The meter reading system applicable to DLMS/COSEM communication protocol according to claim 1, wherein a relationship between a state of the running indicator (1) and the running state of the encryption and decryption module comprises:
the running indicator (1) is always on: a power of the encryption and decryption module is normal, and power supply of the encryption and decryption main control chip is normal;
the running indicator (1) is on for 0.5 second, and off for 0.5 second, and flashes periodically: the encryption and decryption module is in a normal running state;
the running indicator (1) is on for 0.2 second, and off for 0.2 second, and flashes quickly and periodically: the encryption and decryption module is in a running state of communication, and encryption and decryption; and
the running indicator (1) is on for 1 second, and off for 1 second, and flashes slowly and periodically: the encryption and decryption module is in an abnormal working state, and the abnormal working state comprises abnormal program self-checking and long-term abnormal communication .

4. The meter reading system applicable to DLMS/COSEM communication protocol according to claim 1, wherein the encryption and decryption interface circuit also acts as an installation or welding interface between the encryption and decryption module and an external module circuit board, and a form of the interface corresponds to a connector interface or a SMD welding interface.

5. The meter reading system applicable to DLMS/COSEM communication protocol according to claim 1, wherein parameter requirements of the encryption and decryption main control chip are as follows:
core: above M0; dominant frequency: above 8 MHz; FLASH: 32 KB, with IAP function, and configured for storing parameters; RAM: 8KB; SPI: 1; GPIO: more than 5; and package: SOP16.

6. The meter reading system applicable to DLMS/COSEM communication protocol according to claim 1, wherein the running indicator light (1) is a SMD light-emitting diode, which is namely an LED light, and a color of the running indicator light (1) is green.

7. The meter reading system applicable to DLMS/COSEM communication protocol according to claim 1, wherein the communication protocol between the encryption and decryption module and the first main control chip comprises a physical layer and a protocol layer, the physical layer inputs and outputs data through the input pin MOSI and the output pin MISO of the encryption and decryption interface circuit, the encryption and decryption module is a slave, and the first main control chip is a master;
the protocol layer comprises a communication frame sent by the master to the slave and a communication frame returned by the slave to the master, and the communication frame sent by the master to the slave sequentially comprises fields of a frame header, a length LEN, a command CTR, a type TYPE, frame data DATE1 sent by the master, a check bit CRC and a frame tail; and
the communication frame returned by the slave to the master sequentially comprises fields of a frame header, a length LEN, a flag FLG, frame data DATE2 responded by the slave, a check bit CRC and a frame tail.

8. The meter reading system applicable to DLMS/COSEM communication protocol according to claim 1, wherein the frame header and the frame tail are configured for identifying one completed communication frame;
the length LEN is a total length of one communication frame excluding a frame header and a frame tail, the length LEN is one byte, and the total length of one communication frame is unable to exceed 256 bytes;
the command CTR is configured for the master to send an operating command to the slave;
the type TYPE is configured for setting operating types corresponding to different operating commands according to an value of the command CTR;
the frame data DATE1 sent by the master is configured for sending data corresponding to different operating commands to the slave according to the value of the command CTR;
the flag FLG is configured for identifying a validity of data read by the slave;
the frame data DATE2 responded by the slave is configured for the slave to return data to the master according to the flag FLG; and
the check bit CRC adopting CRC check, is configured for checking all data in one communication frame except the frame header, the frame tail and the check bit.

## Patentansprüche

1. Zählerablesesystem, das auf ein DLMS/COSEM-Kommunikationsprotokoll anwendbar ist, einen Zähler für elektrische Energie und eine Zählerablesevorrichtung umfassend, wobei der Zähler für elektrische Energie einen Hauptsteuerchip des Zählers für elektrische Energie und ein Verschlüsselungs- und Entschlüsselungsmodul des Zählers für elektrische Energie umfasst, die Zählerablesevorrichtung einen Hauptsteuerchip der Zählerablesevorrichtung und ein Verschlüsselungs- und Entschlüsselungsmodul der Zählerablesevorrichtung umfasst, das Verschlüsselungs- und Entschlüsselungsmodul des Zählers für elektrische Energie das gleiche wie das Verschlüsselungs- und Entschlüsselungsmodul der Zählerablesevorrichtung ist, gemeinsam bezeichnet als das Verschlüsselungs- und Entschlüsselungsmodul, und der Hauptsteuerchip des Zählers für elektrische Energie und der Hauptsteuerchip der Zählerablesevorrichtung gemeinsam als ein erster Hauptsteuerchip bezeichnet werden; und wobei
ein Datenverschlüsselungs- und -entschlüsselungsverarbeitungsmodus des Zählers für elektrische Energie Folgendes umfasst:
Eintreten von verschlüsselten Daten, die durch die Zählerablesevorrichtung gesendet werden, nach der Umwandlung in der physikalischen Schicht durch eine Kommunikationsschnittstellenschaltung in den Hauptsteuerchip des Zählers für elektrische Energie; Senden der verschlüsselten Daten durch den Hauptsteuerchip des Zählers für elektrische Energie an das Verschlüsselungs- und Entschlüsselungsmodul des Zählers für elektrische Energie, das die Daten entschlüsselt und die entschlüsselten Daten zurück an den Hauptsteuerchip des Zählers für elektrische Energie sendet; Fertigstellen der DLMS/COSEM-Protokollverarbeitung gemäß Klartext durch den Hauptsteuerchip des Zählers für elektrische Energie und dann Senden von zu verschlüsselnden Daten an das Verschlüsselungs- und Entschlüsselungsmodul des Zählers für elektrische Energie; Verschlüsseln der Daten durch das Verschlüsselungs- und Entschlüsselungsmodul des Zählers für elektrische Energie und Zurücksenden des verschlüsselten Chiffretextes an den Hauptsteuerchip des Zählers für elektrische Energie; und Zurücksenden des Chiffretextes durch den Hauptsteuerchip des Zählers für elektrische Energie an die Zählerablesevorrichtung über die Kommunikationsschnittstelle; und
ein Datenverschlüsselungs- und -entschlüsselungsverarbeitungsmodus der Zählerablesevorrichtung der gleiche wie der Datenverschlüsselungs- und - entschlüsselungsverarbeitungsmodus des Zählers für elektrische Energie ist;
und umfassend einen Hauptsteuerchip zur Verschlüsselung und Entschlüsselung, eine Schnittstellenschaltung zur Verschlüsselung und Entschlüsselung, eine Leistungsschaltung zur Verschlüsselung und Entschlüsselung und eine Betriebsanzeigeleuchte (1), wobei:
der Hauptsteuerchip zur Verschlüsselung und Entschlüsselung eine Kernvorrichtung des Verschlüsselungs- und Entschlüsselungsmoduls ist und zum Fertigstellen von Verschlüsselungs- und Entschlüsselungsvorgängen von Daten konfiguriert ist;
die Schnittstellenschaltung zur Verschlüsselung und Entschlüsselung so konfiguriert ist, dass die Schnittstellenschaltung zur Verschlüsselung und Entschlüsselung eine Daten- und Signalinteraktion mit einem externen Modul durchführt, und das externe Modul sich auf Module mit Ausnahme des Verschlüsselungs- und Entschlüsselungsmoduls in dem Zähler für elektrische Energie und in der Zählerablesevorrichtung bezieht;
die Leistungsschaltung zur Verschlüsselung und Entschlüsselung zum Umwandeln eines durch die Schnittstellenschaltung zur Verschlüsselung und Entschlüsselung eingegebenen Leistungspegels in einen von dem Verschlüsselungs- und Entschlüsselungsmodul benötigten Pegel konfiguriert ist; und
die Betriebsanzeigeleuchte (1) zum Anzeigen eines Betriebszustands des Verschlüsselungs- und Entschlüsselungsmoduls konfiguriert ist;
der Pin der Schnittstellenschaltung zur Verschlüsselung und Entschlüsselung einen Ausgabe-Pin STA umfasst, wobei der Ausgabe-Pin STA zum Anzeigen des Betriebszustands des Verschlüsselungs- und Entschlüsselungsmoduls, zum Anzeigen, dass das Verschlüsselungs- und Entschlüsselungsmodul abnormal arbeitet oder sich im Verschlüsselungs- und Entschlüsselungsprozess befindet, wenn ein hoher Pegel ausgegeben wird, und zum Anzeigen, dass das Verschlüsselungs- und Entschlüsselungsmodul im Standby-Modus ist, wenn ein niedriger Pegel ausgegeben wird, konfiguriert ist; und
wobei ein Arbeitsablauf des Verschlüsselungs- und Entschlüsselungsmoduls Folgendes umfasst:
Schritt 1, nachdem das Verschlüsselungs- und Entschlüsselungsmodul eingeschaltet wurde, Ausgeben, durch den Ausgabe-Pin STA, eines hohen Pegels, und Dauerleuchten der Betriebsanzeigeleuchte (l), um eine Selbstprüfung durchzuführen; falls die Selbstprüfung nicht normal ist, langsames und periodisches Blinken der Betriebsanzeigeleuchte (1); und falls die Selbstprüfung normal ist, Ausführen von Schritt 2;
Schritt 2, nachdem das Verschlüsselungs- und Entschlüsselungsmodul die Selbstprüfungsinitialisierung fertiggestellt hat, Ausgeben, durch den Ausgabe-Pin STA, eines niedrigen Pegels, periodisches Blinken der Betriebsanzeigeleuchte (1) und Stehen auf Standby;
Schritt 3, Erfassen, durch den ersten Hauptsteuerchip, dass der Ausgabe-Pin STA einen niedrigen Pegel ausgibt, Senden von Daten an das Verschlüsselungs- und Entschlüsselungsmodul, um Vorgänge durchzuführen; wobei die Vorgänge Verschlüsselung, Entschlüsselung und Lesen und Schreiben umfassen;
Schritt 4, Parsen von empfangenen Daten durch das Verschlüsselungs- und Entschlüsselungsmodul gemäß einem Kommunikationsprotokoll zwischen dem Verschlüsselungs- und Entschlüsselungsmodul und dem ersten Hauptsteuerchip; falls die empfangenen Daten ein Verschlüsselungs- und Entschlüsselungsvorgang sind, Ausführen von 5, und falls die empfangenen Daten ein Lesevorgang sind, Ausführen von Schritt 6;
Schritt 5, Durchführen des Verschlüsselungs- und Entschlüsselungsvorgangs: Senden von zu verschlüsselnden und zu entschlüsselnden Daten durch den ersten Hauptsteuerchip an das Verschlüsselungs- und Entschlüsselungsmodul, Durchführen eines Verschlüsselungs- und Entschlüsselungsvorgangs gemäß einem Verschlüsselungs- und Entschlüsselungstyp durch das Verschlüsselungs- und Entschlüsselungsmodul und Ausgeben eines hohen Pegels durch den Ausgabe-Pin STA; nach der Verschlüsselung und Entschlüsselung Ausgeben eines niedrigen Pegels durch den Ausgabe-Pin STA; und Beurteilen durch den ersten Hauptsteuerchip, ob das Verschlüsselungs- und Entschlüsselungsmodul korrekte Daten empfängt und den Verschlüsselungs- und Entschlüsselungsvorgang startet, indem beurteilt wird, ob ein Zustand des Ausgabe-Pins STA von dem niedrigen Pegel auf den hohen Pegel wechselt; und
Schritt 6, Durchführen des Lesevorgangs: Senden eines Lesebefehls zum Lesen eines Verschlüsselungs- und Entschlüsselungsergebnisses durch den Hauptsteuerchip, der abliest, dass der Ausgabe-Pin STA von dem hohen Pegel auf den niedrigen Pegel wechselt.

2. Zählerablesesystem, das auf das DLMS/COSEM-Kommunikationsprotokoll anwendbar ist, nach Anspruch 1, wobei Pins der Schnittstellenschaltung zur Verschlüsselung und Entschlüsselung einen Eingabe- und Ausgabe-Pin VDD, einen analogen und digitalen Massen-Pin GND, einen Eingabe-Pin MOSI, einen Ausgabe-Pin MISO, einen Eingabe-Pin SCLK, einen Eingabe-Pin CS und einen Eingabe-Pin RST umfassen;
der Eingabe- und Ausgabe-Pin VDD für die Leistungseingabe des Verschlüsselungs- und Entschlüsselungsmoduls konfiguriert ist;
der analoge und digitale Massen-Pin GND zum Massenanschluss des Verschlüsselungs- und Entschlüsselungsmoduls konfiguriert ist und mit einer Masse des Zählers für elektrische Energie oder einer Masse der Zählerablesevorrichtung verbunden ist;
der Eingabe-Pin MOSI eine standardmäßige serielle Schnittstelle ist und für die Dateneingabe des Verschlüsselungs- und Entschlüsselungsmoduls konfiguriert ist;
der Ausgabe-Pin MISO eine standardmäßige serielle Schnittstelle ist und für die Datenausgabe des Verschlüsselungs- und Entschlüsselungsmoduls konfiguriert ist;
der Eingabe-Pin SCLK eine standardmäßige serielle Schnittstelle ist und für die Takteingabe konfiguriert ist;
der Eingabe-Pin CS eine standardmäßige serielle Schnittstelle ist und zum Eingeben eines Chip-Auswahlsignals konfiguriert ist;
und der Eingabe-Pin RST zum Eingeben eines Reset-Signals des Verschlüsselungs- und Entschlüsselungsmoduls konfiguriert ist.

3. Zählerablesesystem, das auf das DLMS/COSEM-Kommunikationsprotokoll anwendbar ist, nach Anspruch 1, wobei eine Beziehung zwischen einem Zustand der Betriebsanzeige (1) und dem Betriebszustand des Verschlüsselungs- und Entschlüsselungsmoduls Folgendes umfasst:
die Betriebsanzeige (1) leuchtet ständig: eine Leistung des Verschlüsselungs- und Entschlüsselungsmoduls ist normal und die Leistungsversorgung des Hauptsteuerchips für die Verschlüsselung und Entschlüsselung ist normal;
die Betriebsanzeige (1) leuchtet 0,5 Sekunden lang und ist 0,5 Sekunden lang aus und blinkt periodisch: das Verschlüsselungs- und Entschlüsselungsmodul befindet sich in einem normalen Betriebszustand;
die Betriebsanzeige (1) leuchtet 0,2 Sekunden lang und ist 0,2 Sekunden lang aus und blinkt schnell und periodisch: das Verschlüsselungs- und Entschlüsselungsmodul befindet sich in einem Betriebszustand von Kommunikation und Verschlüsselung und Entschlüsselung; und
die Betriebsanzeige (1) leuchtet 1 Sekunde lang und ist 1 Sekunde lang aus und blinkt langsam und periodisch: das Verschlüsselungs- und Entschlüsselungsmodul befindet sich in einem abnormalen Arbeitszustand, und der abnormale Arbeitszustand umfasst eine abnormale Programmselbstprüfung und eine langfristige abnormale Kommunikation.

4. Zählerablesesystem, das auf das DLMS/COSEM-Kommunikationsprotokoll anwendbar ist, nach Anspruch 1, wobei die Schnittstellenschaltung zur Verschlüsselung und Entschlüsselung auch als Installations- oder Schweißschnittstelle zwischen dem Verschlüsselungs- und Entschlüsselungsmodul und einer externen Modulschaltkarte fungiert, und eine Form der Schnittstelle einer Steckerschnittstelle oder einer SMD-Schweißschnittstelle entspricht.

5. Zählerablesesystem, das auf das DLMS/COSEM-Kommunikationsprotokoll anwendbar ist, nach Anspruch 1, wobei die Parameteranforderungen des Hauptsteuerchips zur Verschlüsselung und Entschlüsselung wie folgt sind:
Kern: über M0; dominante Frequenz: über 8 MHz; FLASH: 32 KB, mit IAP-Funktion und konfiguriert zum Speichern von Parametern; RAM: 8 KB; SPI: 1; GPIO: mehr als 5; und Paket: SOP16.

6. Zählerablesesystem, das auf das DLMS/COSEM-Kommunikationsprotokoll anwendbar ist, nach Anspruch 1, wobei die Betriebsanzeigeleuchte (1) eine SMD-Leuchtdiode ist, die nämlich eine LED-Leuchte ist, und eine Farbe der Betriebsanzeigeleuchte (1) grün ist.

7. Zählerablesesystem, das auf das DLMS/COSEM-Kommunikationsprotokoll anwendbar ist, nach Anspruch 1, wobei das Kommunikationsprotokoll zwischen dem Verschlüsselungs- und Entschlüsselungsmodul und dem ersten Hauptsteuerchip eine physikalische Schicht und eine Protokollschicht umfasst, die physikalische Schicht Daten über den Eingabe-Pin MOSI und den Ausgabe-Pin MISO der Schnittstellenschaltung zur Verschlüsselung und Entschlüsselung eingibt und ausgibt, das Verschlüsselungs- und Entschlüsselungsmodul ein Slave ist und der erste Hauptsteuerchip ein Master ist;
die Protokollschicht einen Kommunikations-Frame, der durch den Master an den Slave gesendet wird, und einen Kommunikations-Frame, der durch den Slave an den Master zurückgesendet wird, umfasst und der durch den Master an den Slave gesendete Kommunikations-Frame nacheinander Felder eines Frame-Headers, eine Länge LEN, einen Befehl CTR, einen Typ TYPE, durch den Master gesendete Frame-Daten DATE1, ein Prüfbit CRC und ein Frame-Tail umfasst; und
der durch den Slave an den Master zurückgesendete Kommunikations-Frame nacheinander Felder eines Frame-Headers, eine Länge LEN, ein Flag FLG, durch den Slave geantwortete Frame-Data DATE2, ein Prüfbit CRC und ein Frame-Tail umfasst.

8. Zählerablesesystem, das auf das DLMS/COSEM-Kommunikationsprotokoll anwendbar ist, nach Anspruch 1, wobei der Frame-Header und das Frame-Tail zum Identifizieren eines fertiggestellten Kommunikations-Frames konfiguriert sind;
die Länge LEN eine Gesamtlänge eines Kommunikations-Frames ausgenommen eines Frame-Headers und eines Frame-Tails ist, die Länge LEN ein Byte beträgt und die Gesamtlänge eines Kommunikations-Frames nicht in der Lage ist, 256 Bytes zu überschreiten;
der Befehl CTR so konfiguriert ist, dass der Master einen Betriebsbefehl an den Slave sendet;
der Typ TYPE zum Einstellen von Betriebstypen konfiguriert ist, die verschiedenen Betriebsbefehlen gemäß einem Wert des Befehls CTR entsprechen;
die durch den Master gesendeten Frame-Daten DATE1 zum Senden von Daten konfiguriert sind, die verschiedenen Betriebsbefehlen an den Slave gemäß dem Wert des Befehls CTR entsprechen;
das Flag FLG zum Identifizieren einer Gültigkeit der durch den Slave gelesenen Daten konfiguriert ist;
die durch den Slave geantworteten Frame-Daten DATE2 so konfiguriert sind, dass der Slave Daten gemäß dem Flag FLG an den Master zurücksendet; und
das Prüfbit CRC, das die CRC-Prüfung übernimmt, zum Prüfen aller Daten in einem Kommunikations-Frame ausgenommen des Frame-Headers, des Frame-Tails und des Prüfbits konfiguriert ist.

## Revendications

1. Système de lecture de compteur applicable au protocole de communication DLMS/COSEM, comprenant un compteur d'énergie électrique et un dispositif de lecture de compteur, ledit compteur d'énergie électrique comprenant une puce de commande principale du compteur d'énergie électrique et un module de chiffrement et de déchiffrement du compteur d'énergie électrique, ledit dispositif de lecture de compteur comprenant une puce de commande principale du dispositif de lecture de compteur et un module de chiffrement et de déchiffrement du dispositif de lecture de compteur, ledit module de chiffrement et de déchiffrement du compteur d'énergie électrique étant le même que le module de chiffrement et de déchiffrement du dispositif de lecture de compteur, collectivement appelé le module de chiffrement et de déchiffrement, et ladite puce de commande principale du compteur d'énergie électrique et ladite puce de commande principale du dispositif de lecture de compteur étant collectivement appelées une première puce de commande principale ; et
un mode de traitement de chiffrement et de déchiffrement de données du compteur d'énergie électrique comprenant :
des données chiffrées envoyées par le dispositif de lecture de compteur après conversion en couche physique par un circuit d'interface de communication, entrant dans la puce de commande principale du compteur d'énergie électrique ; l'envoi, par la puce de commande principale du compteur d'énergie électrique, des données chiffrées au module de chiffrement et de déchiffrement du compteur d'énergie électrique, qui déchiffre les données et renvoie les données déchiffrées à la puce de commande principale du compteur d'énergie électrique ; l'achèvement, par la puce de commande principale du compteur d'énergie électrique, du traitement du protocole DLMS/COSEM selon le texte clair, et ensuite l'envoi de données à chiffrer au module de chiffrement et de déchiffrement du compteur d'énergie électrique ; le chiffrement, par le module de chiffrement et de déchiffrement du compteur d'énergie électrique, des données et le renvoi du cryptogramme chiffré à la puce de commande principale du compteur d'énergie électrique ; et le renvoi, par la puce de commande principale du compteur d'énergie électrique, du cryptogramme au dispositif de lecture de compteur par l'interface de communication ; et
un mode de traitement de chiffrement et de déchiffrement de données du dispositif de lecture de compteur étant le même que le mode de traitement de chiffrement et de déchiffrement de données du compteur d'énergie électrique ;
et comprenant une puce de commande principale de chiffrement et de déchiffrement, un circuit d'interface de chiffrement et de déchiffrement, un circuit d'alimentation de chiffrement et de déchiffrement et un voyant lumineux de fonctionnement (1),
ladite puce de commande principale de chiffrement et de déchiffrement étant un dispositif de cœur du module de chiffrement et de déchiffrement, et étant configurée pour achever les opérations de chiffrement et de déchiffrement de données ;
ledit circuit d'interface de chiffrement et de déchiffrement étant configuré pour que le circuit d'interface de chiffrement et de déchiffrement effectue une interaction de données et de signaux avec un module externe, et ledit module externe se référant à des modules à l'exception du module de chiffrement et de déchiffrement dans le compteur d'énergie électrique et le dispositif de lecture de compteur ;
ledit circuit d'alimentation de chiffrement et de déchiffrement étant configuré pour convertir un niveau de puissance entré par le circuit d'interface de chiffrement et de déchiffrement en un niveau nécessaire au module de chiffrement et de déchiffrement ; et
ledit voyant lumineux de fonctionnement (1) étant configuré pour afficher un état de fonctionnement du module de chiffrement et de déchiffrement ;
ladite broche du circuit d'interface de chiffrement et de déchiffrement comprenant une broche de sortie STA, ladite broche de sortie STA étant configurée pour indiquer l'état de fonctionnement du module de chiffrement et de déchiffrement, indiquant que le module de chiffrement et de déchiffrement fonctionne anormalement ou dans le processus de chiffrement et de déchiffrement si un niveau élevé est émis en sortie, et indiquant que le module de chiffrement et de déchiffrement est en veille si un niveau bas est émis en sortie ; et
un flux de travail du module de chiffrement et de déchiffrement comprenant :
l'étape 1, après la mise sous tension du module de chiffrement et de déchiffrement, l'émission en sortie, par la broche de sortie STA, d'un niveau élevé, et ledit voyant lumineux de fonctionnement (1) étant toujours allumé pour réaliser une autovérification ; si l'autovérification est anormal, le voyant lumineux de fonctionnement (1) clignotant lentement et périodiquement ; et si l'autovérification est normal, l'exécution de l'étape 2 ;
l'étape 2, après l'achèvement de l'initialisation d'autovérification par le module de chiffrement et de déchiffrement, l'émission en sortie, par la broche de sortie STA, d'un niveau bas, le voyant lumineux de fonctionnement (1) clignotant périodiquement, et étant en veille ;
l'étape 3, la détection, par la première puce de commande principale, que la broche de sortie STA émet en sortie un niveau bas, l'envoi de données au module de chiffrement et de déchiffrement pour réaliser des opérations ; les opérations comprenant, le chiffrement, le déchiffrement et la lecture et l'écriture ;
l'étape 4, l'analyse, par le module de chiffrement et de déchiffrement, des données reçues selon un protocole de communication entre le module de chiffrement et de déchiffrement et la première puce de commande principale ; si les données reçues sont une opération de chiffrement et de déchiffrement, l'exécution de 5, et si les données reçues sont une opération de lecture, l'exécution de l'étape 6 ;
l'étape 5, la réalisation de l'opération de chiffrement et de déchiffrement : l'envoi, par la première puce de commande principale, de données à chiffrer et à déchiffrer au module de chiffrement et de déchiffrement, la réalisation, par le module de chiffrement et de déchiffrement, d'une opération de chiffrement et de déchiffrement selon un type de chiffrement et de déchiffrement, et l'émission en sortie, par la broche de sortie STA, d'un niveau élevé ; après le chiffrement et le déchiffrement, l'émission en sortie, par la broche de sortie STA, d'un niveau bas ; et le jugement, par la première puce de commande principale, pour savoir si le module de chiffrement et de déchiffrement reçoit des données correctes et commence l'opération de chiffrement et de déchiffrement en jugeant si un état de la broche de sortie STA passe du niveau bas au niveau haut ; et
l'étape 6, la réalisation de l'opération de lecture : l'envoi, par la puce de commande principale lisant que la broche de sortie STA passe du niveau haut au niveau bas, d'une commande de lecture pour lire un résultat de chiffrement et de déchiffrement.

2. Système de lecture de compteur applicable au protocole de communication DLMS/COSEM selon la revendication 1, lesdites broches du circuit d'interface de chiffrement et de déchiffrement comprenant une broche d'entrée et de sortie VDD, une broche de masse analogique et numérique GND, une broche d'entrée MOSI, une broche de sortie MISO, une broche d'entrée SCLK, une broche d'entrée CS et une broche d'entrée RST ;
ladite broche d'entrée et de sortie VDD étant configurée pour une entrée de puissance du module de chiffrement et de déchiffrement ;
ladite broche de masse analogique et numérique GND étant configurée pour mettre à la masse le module de chiffrement et de déchiffrement, et étant connectée à une masse du compteur d'énergie électrique ou à une masse du dispositif de lecture de compteur ;
ladite broche d'entrée MOSI étant une interface série standard, et configurée pour une entrée de données du module de chiffrement et de déchiffrement ;
ladite broche de sortie MISO étant une interface série standard, et configurée pour une sortie de données du module de chiffrement et de déchiffrement ;
ladite broche d'entrée SCLK étant une interface série standard, et configurée pour une entrée d'horloge ;
ladite broche d'entrée CS étant une interface série standard, et configurée pour entrer un signal de sélection de puce ;
et ladite broche d'entrée RST étant configurée pour entrer un signal de réinitialisation du module de chiffrement et de déchiffrement.

3. Système de lecture de compteur applicable au protocole de communication DLMS/COSEM selon la revendication 1, une relation entre un état de l'indicateur de fonctionnement (1) et l'état de fonctionnement du module de chiffrement et de déchiffrement comprenant :
l'indicateur de fonctionnement (1) est toujours allumé : une alimentation du module de chiffrement et de déchiffrement est normale, et une alimentation de la puce de commande principale de chiffrement et de déchiffrement est normale ;
l'indicateur de fonctionnement (1) est allumé pendant 0,5 seconde, et éteint pendant 0,5 seconde, et clignote périodiquement : le module de chiffrement et de déchiffrement est dans un état de fonctionnement normal ;
l'indicateur de fonctionnement (1) est allumé pendant 0,2 seconde, et éteint pendant 0,2 seconde, et clignote rapidement et périodiquement : le module de chiffrement et de déchiffrement est dans un état de fonctionnement de communication, et de chiffrement et de déchiffrement ; et
l'indicateur de fonctionnement (1) est allumé pendant 1 seconde, et éteint pendant 1 seconde, et clignote lentement et périodiquement : le module de chiffrement et de déchiffrement est dans un état de fonctionnement anormal, et l'état de fonctionnement anormal comprend une autovérification de programme anormal et une communication anormale à long terme.

4. Système de lecture de compteur applicable au protocole de communication DLMS/COSEM selon la revendication 1, ledit circuit d'interface de chiffrement et de déchiffrement agissant également comme une interface d'installation ou de soudage entre le module de chiffrement et de déchiffrement et une carte de circuit de module externe, et une forme de l'interface correspondant à une interface de connecteur ou une interface de soudage CMS.

5. Système de lecture de compteur applicable au protocole de communication DLMS/COSEM selon la revendication 1, lesdites exigences de paramètre de la puce de commande principale de chiffrement et de déchiffrement étant les suivantes :
cœur : au-dessus de M0 ; fréquence dominante : au-dessus de 8 MHz ; FLASH : 32 Ko, avec fonction IAP, et configuré pour stocker des paramètres ; RAM : 8 Ko ; SPI : 1 ; GPIO : supérieur à 5 ; et boîtier : SOP16.

6. Système de lecture de compteur applicable au protocole de communication DLMS/COSEM selon la revendication 1, ledit voyant lumineux de fonctionnement (1) est une diode électroluminescente SMD, qui est à savoir un voyant LED, et une couleur du voyant lumineux de fonctionnement (1) est verte.

7. Système de lecture de compteur applicable au protocole de communication DLMS/COSEM selon la revendication 1, ledit protocole de communication entre le module de chiffrement et de déchiffrement et la première puce de commande principale comprenant une couche physique et une couche de protocole, la couche physique entrant et sortant des données par l'intermédiaire de la broche d'entrée MOSI et de la broche de sortie MISO du circuit d'interface de chiffrement et de déchiffrement, ledit module de chiffrement et de déchiffrement étant un esclave, et ladite première puce de commande principale étant un maître ;
ladite couche de protocole comprenant une trame de communication envoyée par le maître à l'esclave et une trame de communication renvoyée par l'esclave au maître, et ladite trame de communication envoyée par le maître à l'esclave comprenant séquentiellement des champs d'un en-tête de trame, d'une longueur LEN, d'une commande CTR, d'un type TYPE, de données de trame DATE1 envoyées par le maître, d'un bit de vérification CRC et d'une queue de trame ; et
ladite trame de communication renvoyée par l'esclave au maître comprenant séquentiellement des champs d'un en-tête de trame, d'une longueur LEN, d'un drapeau FLG, de données de trame DATE2 répondues par l'esclave, d'un bit de vérification CRC et d'une queue de trame.

8. Système de lecture de compteur applicable au protocole de communication DLMS/COSEM selon la revendication 1, ledit en-tête de trame et ladite queue de trame étant configurés pour identifier une trame de communication achevée ;
ladite longueur LEN étant une longueur totale d'une trame de communication à l'exclusion d'un en-tête de trame et d'une queue de trame, ladite longueur LEN étant d'un octet et ladite longueur totale d'une trame de communication ne pouvant pas dépasser 256 octets ;
ladite commande CTR étant configurée pour que le maître envoie une commande de fonctionnement à l'esclave ;
ledit type TYPE étant configuré pour définir des types de fonctionnement correspondant à différentes commandes de fonctionnement selon une valeur de la commande CTR ;
lesdites données de trame DATE1 envoyées par le maître étant configurées pour envoyer des données correspondant à différentes commandes de fonctionnement à l'esclave selon la valeur de la commande CTR ;
ledit drapeau FLG étant configuré pour identifier une validité de données lues par l'esclave ;
lesdites données de trame DATE2 répondues par l'esclave étant configurées pour que l'esclave renvoie des données au maître selon le drapeau FLG ; et
ledit bit de vérification CRC adoptant la vérification CRC, étant configuré pour vérifier toutes les données dans une trame de communication à l'exception de l'en-tête de trame, de la queue de trame et du bit de vérification.
